# EUROPEAN PATENT SPECIFICATION

(11) **EP 1 190 595 B1**
(45) Date of publication and mention of the grant of the patent: **17.12.2008**
(21) Application number: 01958088.5
(22) Date of filing: 04.07.2001
(51) Int. Cl.: H04Q 7/38

(54) **METHOD FOR TRACING THE LOCATION OF A TELECOMMUNICATIONS TERMINAL**
VERFAHREN ZUM VERFOLGEN DES AUFENTHALTSORTES EINES TELEKOMMUNIKATIONSENDGERÄTES
PROCEDE DE SUIVI DE LA LOCALISATION D'UN TERMINAL DE COMMUNICATIONS

(30) Priority: 07.07.2000 FI 20001629
(43) Date of publication of application: 27.03.2002
(73) Proprietor: Elisa Oyj, 00520 Helsinki (FI)
(72) Inventor: SUNDELL, Juha, FIN-00730 Helsinki (FI)
(74) Representative: Lipsanen, Jari Seppo Einari
(86) International application number: PCT/FI2001/000641
(87) International publication number: WO 2002/005585

(56) References cited:
- EP-A2- 0 987 914
- US-A- 4 083 003

## Description

The present invention relates to a method according to the preamble of Claim 1 for tracing the location of a telecommunications terminal element, in which method the location of the telecommunications terminal element is estimated on the basis of the known location data of reference elements and of signalling between the telecommunications terminal element and the reference elements.

Methods of this kind are used to determine the location of a mobile station. Information is exploited to locate a device or person associated with the mobile station, for example, in connection with an emergency call. The base stations of a mobile network and the satellites of a GPS system, for example, can be used as the reference elements.

The present invention also relates to a telecommunications terminal element according to the preamble of Claim 13.

According to the state of the art, the location of a mobile station is estimated on the basis of the delay-time measurement of a radio transmission. Delay-time measurement systems based on GPS (Global Position System) devices are one of the systems installed in the base station network. By using a server connected to such a system, the location of a mobile station can be determined by calculation, to an accuracy of 50 - 300 m. The location of a mobile station can also be estimated more approximately, for example, by using a method that determines the cell with which the mobile station is communicating. Solutions have also been developed, in which the location of the mobile terminal is estimated on the basis of the field strengths produced by the mobile system's base stations. The location of a mobile station can also be estimated from base-station measurement data relating to the properties of the telecommunications connection between the mobile network and the mobile station. At least one form of this kind of information is the data used to select the best base station connection for the mobile station. There are also such systems based on GPS devices, in which the GPS device is installed to operate in the mobile station.

A drawback of the state of the art is that it demands considerable additional installations in the mobile network, such as the installation of servers to carry out labourious calculations. This is required to permit the calculation of the location data of mobile stations from the delay-time measurements of the radio transmission, the field strengths, and/or the properties of the telecommunications connection between the mobile station and the mobile network. Such installations demand large investments, because calculations based on delay-time measurements, for example, demand precise information on the physical properties of the geographical area being measured, if there are many reflecting surfaces in the area. The methods that can be implemented with smaller investments, such as those that identify the cell with which the mobile station is communicating, do not give more than a rough estimate of the location of the mobile station. This is due to factors such as the fact that a mobile station may change the cell with which it is communicating, even while remaining stationary. Systems supported by a GPS device are basically relatively accurate (app. 50 - 150 m) and become extremely accurate (app. 1 m) if a differential correction signal is used. In fact, accuracies of even one centimetre can be achieved. However, the operation of a GPS device requires a sufficiently unobstructed visibility to the satellites, so that such a system will not operate within buildings, next to their walls, or under trees.

EP-A-0 987 914 discloses a method for tracing the position of a mobile terminal. The method comprises receiving position data, and selecting and storing such position data items whose position accuracy is better than a predetermined position accuracy.

The invention is intended to create an entirely new, uncomplicated and simple method for tracing the location of a mobile station.

The invention is based on installing a telecommunications terminal element to filter the cell information received by the mobile station. Here, cell information refers to the information received by the mobile station concerning the cell and cell area serving it Filtering takes place by the telecommunications terminal element comparing the location messages received by the mobile station. Following the reception of an adequate number of sufficiently similar location messages, location information according to the latest location message is sent in the direction of the entity tracing the location of the telecommunications terminal element. The telecommunications terminal element for use according to the invention can be, for example, a subscriber card, such as a SIM card.

More specifically, the method according to the invention, for tracing the location of a telecommunications terminal element, is characterized by what is stated in the characterizing portion of Claim 1.

The telecommunications terminal element according to the invention is, in turn, characterized by what is stated in the characterizing portion of Claim 13.

Considerable advantages are gained with the aid of the invention. The invention can be applied to avoid the additional installations necessary in a mobile network for calculating the location information of a mobile station. Precise information on the physical properties of the geographical area being measured is not required. The use of the invention allows the accuracy of methods, which identify the cell with which the mobile station is signalling, to be improved to more than a rough estimate. The method according to the invention also operates without unobstructed visibility to the reference elements.

The preferred application environment for the invention comprises small-cell GSM 1800 networks. The method can be used for rescue purposes, especially in cities and other built-up areas.

### Terminology:

In this patent application, the term mobile station smart card refers to a logic element that can be connected to a mobile station, and which, when connected to the mobile station, affects the operation of the mobile station.

A subscriber card is a mobile station smart card, which, when connected to the mobile station, permits the mobile station to use a specific mobile station connection.

A location message is a message, which depicts the physical location of the mobile station in relation to reference elements. A location message can be a message that identifies the reference element estimated to be closest to the mobile station.

The location parameters of the mobile station are parameters used to express the physical location of the mobile station. The location parameters can be, for example, the MCC, MNC, LAC, and CI parameters according to the GSM standard.

The entity tracing the location of the mobile station can be a person, corporation, telecommunications terminal, address, or a physical or logical equipment element.

The location information according to the latest location message is a depiction of a location according to the parameters of the latest location message.

In the following, the invention is examined with the aid of examples and with reference to the accompanying drawings.

Figure 1 shows a state diagram of one method according to the invention for tracing the location of a telecommunications terminal element, in terms of the functioning of a mobile station smart card.

Figure 2 shows a state diagram of one method according to the invention for tracing the location of a telecommunications terminal, in which a cell broadcast is used.

Figure 3 shows an operational diagram of one method according to the invention, for tracing the location of a telecommunications terminal element, in terms of the operations external to the mobile station smart card.

Figure 4 shows a flow diagram of one manner of implementation for a luck counter in one method according to the invention.

Figure 5 shows a flow diagram of one method according to the invention for tracing the location of a telecommunications terminal element on the basis of cell data received from the direction of the mobile station.

In the examples of embodiments 1 and 2, the invention is applied with the aid of the instruction set of the Sim Application Toolkit according to the GSM standard. This instruction set is utilized, for example, by means of a program recorded on a SIM card. The solution exploits the identification and location parameters of the mobile station, such as the MCC, MNC, LAC, CI, and IMEI codes. The IMEI defines the mobile telephone unit, in which the SIM card is installed. The MCC and MNC codes state the country and operator, in whose network the mobile station is. The LAC and CI codes state the location area and cell area, within which the mobile station is.

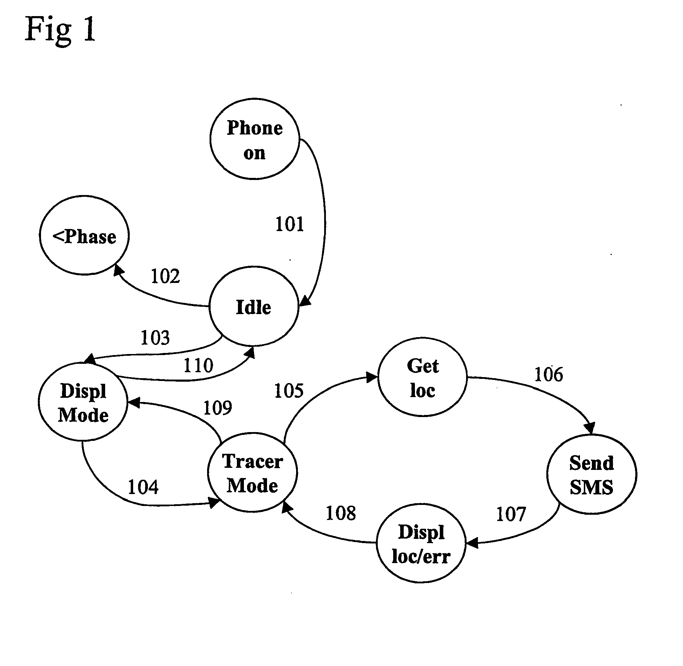

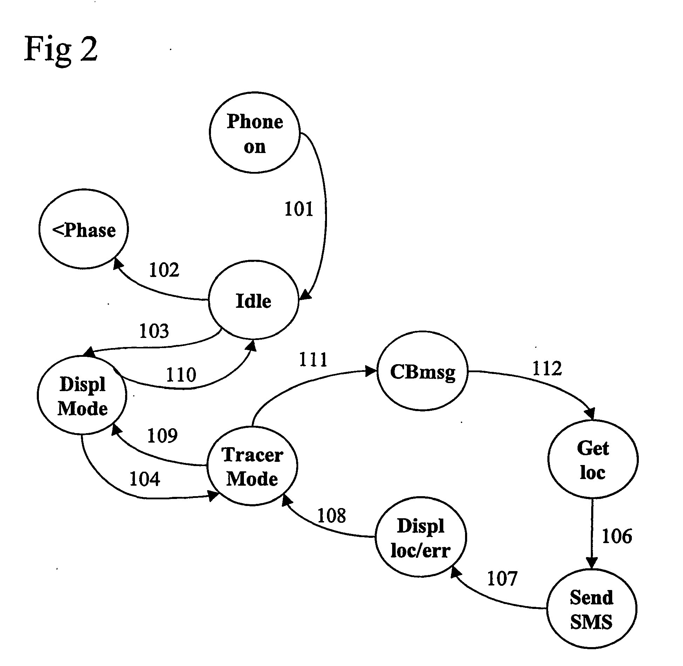

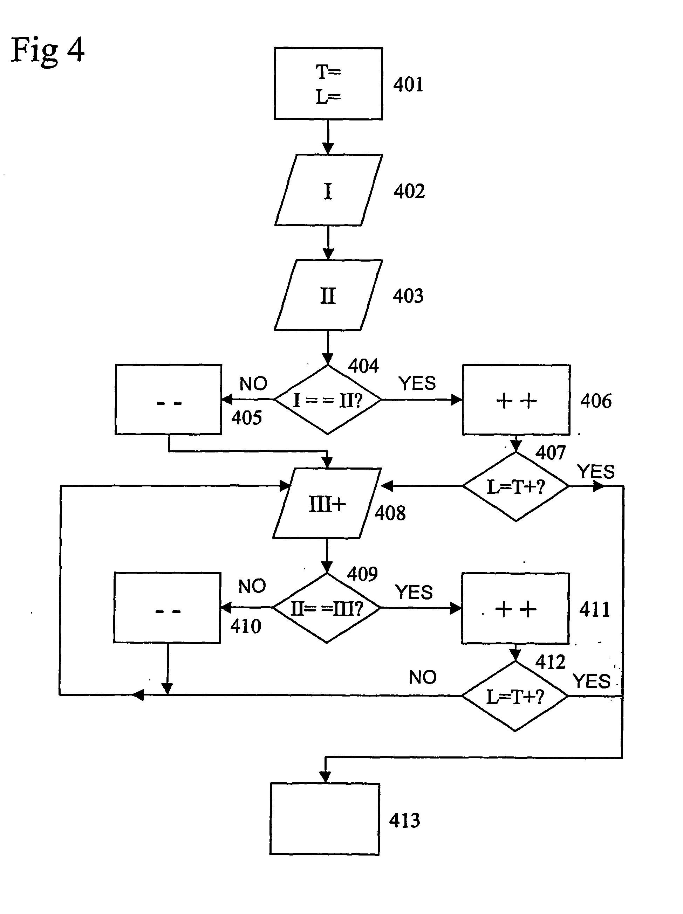

In the examples according to Figures 1 - 5, the telecommunications terminal element being traced is a mobile station. In the examples according to Figures 1 and 2, the SIM card connected to the mobile station has a luck counter defined for it, for which a target value and comparative index are set. The luck counter is a system, which is set the increase the comparative index in response to a received "Location Information" message corresponding to a previously received "Location Information" message and to reduce the comparative index in response to a message deviating from a previously received "Location Information" message. The luck counter is set to signal in response to the target value being reached. The luck counter can be implemented as a software element, e.g., according to the flow diagram of Figure 4.

In the method according to the state diagram of Figure 1, the following numbered stages are performed:
Stages 101 - 104 are carried out to check the available state of the location tracing method, to determine the desire to use the method, and to communicate the initiation of the location tracing method in the direction of the mobile station.
   101) In response to the signals, received from the direction of the interface of the mobile station, needed to switch on the mobile station, a move takes place from the "Phone on" to the "Idle" state.
      In the "Idle" state, if the functionality of the mobile station is insufficient to use the location tracing method described here, stage 102 of the method is performed. If the functionality of the mobile station is sufficient for the use of the location tracing method described here, stage 103 of the method is performed.
   102) An analysis determines whether the functionality of the mobile station is sufficient to use the mobile station location tracing method. If it is not, the next move is to the state "Phase" and the performance of the method is terminated.
   103) If the functionality of the mobile station is sufficient to use the location tracing method, a tracing activation message is awaited from the direction of the mobile station. In response to the reception of the activation message, a move takes place to the state "Displ Mode". The tracing activation can alternatively be set as a default value for the SIM card, in which case the move to the "Displ Mode" state can take place immediately after the functionality check.
   104) A message stating that tracing has been activated, such as the text "Tracing activated", is sent in the direction of the display of the mobile station and the sequence moves to the "Tracer Mode" state.
Stage 105 of the method is carried out to set the desired timing for the location tracing method described here. Stage 106 of the method is carried out to filter the probable location of the mobile station from the location messages received from the direction of the mobile station. Stage 107 of the method is carried out to send the filtered location information in the direction of the entity tracing the location of the mobile station while stage 108 of the method is carried out to present the filtered location information on the display of the mobile station. It is also possible to omit either stage 107 or 108.
   105) A move is made to the "Get loc" state in response to the triggering of the pick timer.
   106) At least one request signal, according to the GSM 11.14 standard, for sending a "Location Information" message to the SIM card, is sent to the mobile station. At least one "Location Information" message is received and the luck counter installed in the SIM card compares its content with the contents of previously received messages of a similar type. If the information content of the "Location Information" message is the same as in a previous message of the same type, the luck counter set for the SIM card is moved towards the target value. If the information content of the "Location Information" message differs from that in a previous message of the same type, the luck counter set for the SIM card is moved away from the target value. If the "Location Information" message contains an error message, the luck counter can be left unaltered. Luck counters, which only analyse some field of the "Location Information" message or some specific fields of the "Location Information" message, may also be used. Once the luck counter has signalled that the target value has been reached, the sequence goes to the "Send SMS" state.
   107) A location message is sent in the direction of a previously defined network address, such as a telephone number or an IP address. Alternatively, the location message can be sent to a destination address that can be defined from the interface of the SIM card. The content of the location message can be, for example, according to section 11.19 of the GSM 11.14 standard, so that it will contain an MCC, an MNC, an LAC, and the Cell ID. The location message can also contain an IMEI message according to section 11.20 of the GSM 11.14 standard. Once the location message has been sent, the sequence moves to the "Disp loc/err" state.
   108) The display of the mobile station is commanded to present the MCC, MNC, LAC, and Cell ID, or the location formed from them, in numerical or graphical mode.
Stages 109 - 110 of the method are carried out to passivize location tracing, in response to commands received from the direction of the interface of the mobile station.
109) In response to a tracing deactivation message received from the interface of the mobile station, the sequence moves to the "Displ-mode" state, in which a message stating that tracing has been passivized, such as the text "tracing passivized", is sent in the direction of the display of the mobile station.
   110) After this, the sequence moves to the "Idle" state, to await possible reactivation of location tracing.
      In the method according to the state diagram of Figure 2, cell broadcasting is applied to the location tracing. In this case, the method stages shown in Figure 1 are carried out in all other respects, except that stage 105 is replaced with the stages 111 - 112, described in the following.
Stage 111 is carried out to time as desired the operations performed by the SIM card while stage 112 is carried out to start the luck counter in response to a request received from the telecommunications network.
   111) In response to the triggering of the pick timer, the sequence moves to the "GBmsg" state.
   112) At least one specified-form message used for location tracing, with a predefined message identifier and transmitted by a cell broadcast, is received from the direction of the mobile station, and a corresponding signal flag "CBOK" is raised. The sequence moves to the "Get loc" state. Tracing of the location of the mobile station then takes place in response to a initiator received from the mobile network or from the direction of the mobile network. Thus, the initiator received from the mobile network can be used to command the mobile station smart card to filter the location of the mobile station connected to it, at a desired time and in a desired area. A specified-form message is then received from the mobile network, by means for reception at least one specified-form message, which has a predefined message identified and is transmitted by cell broadcast. The specified-form message then received is used as an initiator, by means for using as an initiator at least one specified-form message transmitted by cell broadcast, with a predefined message identifier.

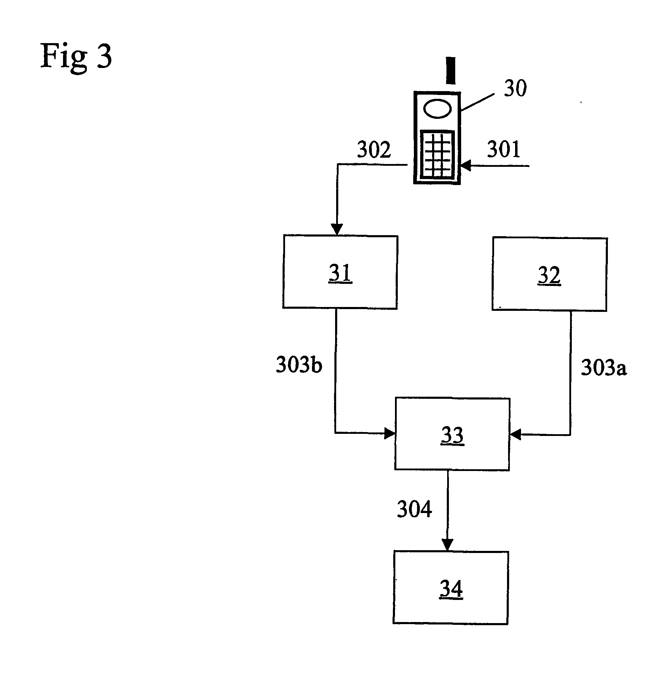

In the operational diagram of Figure 3, the following elements are used:

The mobile station 30 is a mobile station, the location of which is traced in response to location messages received from the direction of the mobile station connection connected to the mobile station 30.

The message database 31 is a database, which is updated in response to location messages received from the direction of the mobile station connection.

The area database 32 is a database, which contains base-station-specific data. Such data include the location of the base station and the calculative centre-points of the cells and the audibility of the cell areas. These may either have either fixed definitions or may be calculated from other parameters of the base station, such are the direction and height of the antenna. The area database can also include parameters, such as buildings or areas of water, of the physical area of the antenna's calculative coverage service area that affect the progress of the radio waves.

The location server 33 is a server operating in the system of the mobile station operator, which is set to receive base-station-specific data from the direction of the area database 32 and location messages from the direction of the message database 31.

The electronic map system 34 is a system that is set to interpret, e.g., the GLL messages used in the GPS location system.

In the method according to Figure 3, the following stages are carried out:
Method stage 301 is carried out, if it is wished to use the telecommunications network to command the mobile station smart card to filter and send location messages at a desired time and/or in a desired area. This can be done, for example, to avoid unnecessary filtering and transmission carried out by the mobile station smart card. However, the method can alternatively begin to be carried out from stage 302, which is carried out to determine the location information.
   301) At least one fixed-mode message for use in location tracing, which has a predefined Message Identifier, is sent in the direction of the mobile station by means of a cell broadcast.
   302) In the communications database 31, at least one set of location data is received from the direction of the mobile station as an SMS message, or by means of some other form of data communications connection or protocol. The location message or location messages, with their time stamps, are recorded in the communications database 31. The location data received from the direction of the mobile station comprises a set of location parameters, which in this case are referred to as the location parameter set, contained in a location message. The set of location parameters can include MCC, MNC, LAC, and CI parameters according to the GSM standard, or a sub-set of these.
The method stages 303 and 304 are carried out to search for the geographical location corresponding to the location message and to send the location of the mobile station in the direction of the next entity.
   303) Base-station-specific data is received by the location server 33 from the direction (303a) of the area database 32 and location messages from the direction (303b) of the communications database 31. After this, at least one location message is linked to the centre-point co-ordinate data of the base station in question and a GLL message according to NMEA-0182, which is the location tracing message used in this example, is formed from the relevant co-ordinate data. The cell corresponding to the location parameters or the co-ordinates indicating the interior of the location area, such as the co-ordinates of the centre-point of the cell (CIcr) or of the location area (LACcr) are then sought (303).
   304) A location tracing message is sent from the location server 33 in the direction of the electronic map system 34. The location tracing message can as such also be sent as an SMS message in the direction of the second telecommunications terminal or by means of some other kind of data communications connection. The location tracing message can then be directly read and interpreted by the recipient.

In the GLL message, the GLL field is the identification label identifying the message, the Latitude field states the latitude, the Longitude field the longitude, the UTC field the time, while A is a check sum.

The luck counter according to Figure 4 can be implemented by means of the telecommunications terminal element. The telecommunications terminal element is an apparatus, software, or a combination of them, operating of the customer side of the customer interface of the mobile network. The telecommunications terminal element can be, for example, a mobile station smart card, such as a subscriber card, a mobile station, a computer software product, or some combination of them.

In the method according to Figure 4, the following stages are carried out:
Method stage 401 is carried out to initialize the luck counter into operating condition and to adapt the luck counter for the desired operating environment.
   401) The initial value and target value of the comparative index of the luck counter are set. The target value and the comparative index are then defined to be available to the mobile station smart card and/or the mobile station. This is done by using definition means, i.e. means for defining the target value and the comparative index to be available to the telecommunications terminal element.
The method stages 402 - 403 are carried out to receive the cell data to be filtered. For this purpose, receiving means are used, i.e. means for receiving such location messages as contain the location parameters of the mobile station. The receiving means can include means for receiving MCC, MNC, LAC, and CI parameters according to the GSM standard, or a subset of them.
   402) A first location message, which contains the location parameters of the mobile station, is received from the direction of the mobile station.
   403) A second location message, which contains the location parameters of the mobile stations, is received from the direction of the mobile station.
Method stage 404 is carried out to determine the similarity of the received location messages. In different embodiments of the invention, different levels of similarity between the location messages can be required. For example, sometimes it is possible to be satisfied with the location of the mobile station being determined to an accuracy of a cell area. If the GSM system, for example, is then being used, the cell data transmitted in the CI field of the identification and location parameters of the mobile station need not correspond, provided the other fields correspond. Stage 405 is carried out, if the received location messages are regarded as being insufficiently similar. In turn, stage 406 is carried out, if the received location messages are sufficiently similar.
   404) The first location message is compared with the essential parts , such as the identification of the specific mobile station and the location parameters, of the second location message. A set of the location parameters contained in the location message is then selected to form a set of comparative parameters, which is compared with the corresponding comparative parameters of the location message received earlier. The selection is made by selection means, i.e. by means for selecting a set of the location parameters contained in the location message, to form a set of comparative parameters. The comparison is, in turn, performed by comparison means, i.e. means for comparing the set of comparative parameters coming in the location message with a corresponding set of comparative parameters contained in the location message received earlier. In a typical application, the comparison is set to use the previous location message as the location message received earlier.
   405) The value of the luck counter is changed to be further from the target value. The comparative index is then changed so that its deviation from the target value increases, to the extent that the set of comparative parameters deviates from the set of comparative parameters of the location message received earlier. For this purpose, it is possible to use deviation-increase means, i.e. means for making the comparative index deviate increasingly from the target value to the extent that the set of comparative parameters deviates from the corresponding set of comparative parameters of the location message received earlier.
   406) The value of the luck counter is changed to be closer to the target value. In this case, the comparative index is changed towards the target value to the extent that the set of comparative parameters corresponds to the set of comparative parameters of the location message received earlier. This can be carried out by using deviation-decrease means, i.e. means for changing the comparative index towards the target value, when the set of comparative parameters contained in the location message corresponds to the corresponding set of comparative parameters of the location message received earlier. Method stage 407 is carried out, if the luck counter has been changed closer to the target value.
   407) A check is made as to whether the comparative index of the luck counter has reached the target value. The sequence moves to stage 413, if the comparative index of the luck counter has reached the target value.
Stage 408 is carried out to receive the filtered cell data while stage 409 is carried out to determine the similarity of the received location messages.
   408) The next location message is received from the direction of the mobile station.
   409) The next location message is compared with the essential parts of a previous location message, such as the second location message.
Stage 410 is carried out, if the similarity between the received location messages is regarded as being insufficient. Stage 411 is, in turn, carried out, if the received location messages are sufficiently similar. Method stage 412 is carried out, in order to determine whether an adequate number of sufficiently similar location messages has been received.
   410) The value of the luck counter is changed to be further from the target value.
   411) The value of the luck counter is changed to be closer to the target value.
   412) A check is made as to whether the value of the luck counter has reached the target value.
Stage 413 is carried out to send the filtered location data in the direction of the entity tracing the location of the mobile station.
   413) The essential parts of the content of the previous location message are sent in the direction of the entity, such as a mapping system, tracing the location of the mobile station. This can be a distributed system, as in the example according to Figure 3, in which case the content of the location message can be sent in the direction of the message database 31. In response to the comparative index reaching the target value, the location information according to the latest location message is then sent to the mobile station, for sending in the direction of the entity tracing the location of the mobile station. Transmission means are used for this purpose, i.e. means for sending the location information according to the latest location message in the direction of the entity tracing the location of the mobile station. The transmission means comprise means for sending the essential parts of the latest comparison, i.e. the location message corresponding to the previous one.

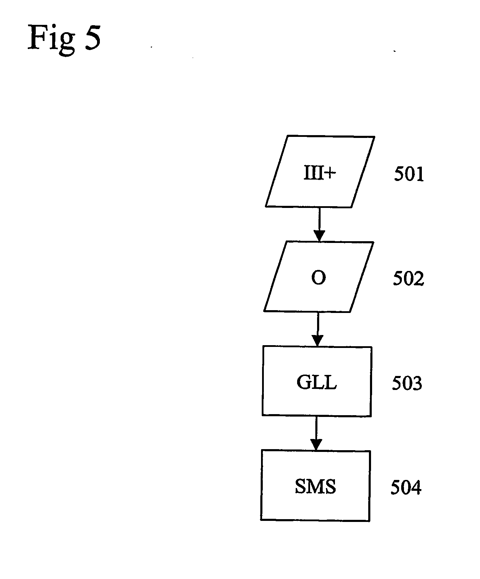

In the method according to Figure 5, the following stages are carried out to trace the location of the mobile station.
501) A location message is received in the mapping system, from the direction of the mobile station connection. When using a distributed mapping system, the element being received can be, for example, the message database 31, shown in Figure 3. Alternatively, location information according to the location message, which states the most essential parameters contained in the location message, can be received.
502) A search is made for the co-ordinate data of the estimated most probable location point of the cell or cell area, such as the centre-point of the cell area or cell, of the mobile station using the mobile station connection. When using a distributed mapping system, the estimated most probable location point of the mobile station 30 using the mobile station connection can be sought, for example, from the area database 32 shown in Figure 3.
503) A location tracing message, according to the standard used in the mapping system, such as a GLL message according to NMEA-0182, is formed from the co-ordinate data.
504) The location tracing message is sent in the direction of the entity tracing the location of the mobile station, and by means of whom is it desired to trace the location of the mobile station. The location tracing message can be transmitted to a second mobile station, for example, in the form of a short text message.

Embodiments of the invention, differing from those disclosed above, can also be contemplated within the scope of the invention.

For example, the functionality of the SIM card can be implemented by means of the desired kind of control circuit integrated in the mobile station, or by means of a mobile station smart card, such as a WIM card to be applied to a WAP telephone in the definition stage, connected to operate with the mobile station, or correspondingly by means of a USIM card of a third-generation mobile system.

The method described above can also be applied by setting the time within which a specified-form message used to trace location and with a message identifier set for it, must be received. If such a message is not received within the set time, the operation of the luck counter is interrupted.

The invention can be applied in such a way that the location information according to the latest location message comprises the essential parts of the latest location message, i.e. it includes the most essential parameters of the location message.

When applying the invention according to the example of Figure 3, desired co-ordinate data, such as the centre of gravity, indicating the interior of the cell or cell area, can be used in place of the centre-point co-ordinate data.

## Claims

1. A method for tracing the location of a telecommunications terminal element, in which method the location of the telecommunications terminal element is estimated on the basis of the known location data of reference elements and of signalling between the telecommunications terminal element and the reference elements, **characterized in that**
- a target value and a comparative index are defined (401) to be available to the telecommunications terminal element,
- location messages, which contain the location parameters of the telecommunications terminal element, are received (402 - 403) by means of the telecommunications terminal element,
- a set of the location parameters contained in the location message are selected (404) to form a set of comparative parameters,
- the set of comparative parameters is then compared (404) to the set of comparative parameters of a location message received earlier,
- the comparative index is changed (406) towards the target value if the set of comparative parameters corresponds to the set of comparative parameters of a location message received earlier,
- the comparative index is changed (405) away from the target value if the set of comparative parameters deviates from the corresponding set of comparative parameters of a location message received earlier, and
- in response to the comparative index reaching the target value, location information according to the latest location message is sent (413) in the direction of the entity tracing the location of the telecommunications terminal element.

2. A method according to Claim 1, **characterized in that** the set of comparative parameters includes MCC, MNC, LAC, and CI parameters, or a sub-group of them, according to the GSM standard.

3. A method according to either Claim 1 or 2, **characterized in that** the location message received earlier is (404) the previous location message.

4. A method according to any of Claims 1 - 3, **characterized in that** the location information according to the latest location message is (107) the essential parts of the latest location message.

5. A method according to any of Claims 1 - 4, **characterized in that**
- location information according to the location message is received (501) from the direction of the telecommunications terminal element,
- the most probable estimated location point of the telecommunications terminal element, such as the centre-point of the cell area or cell, of the cell area depicted by the location information according to the location message, is sought (502) in the form of co-ordinate data,
- a location tracing message according to the standard used in the mapping system, such as a GLL message according to NMEA-0182, is formed (503) from the co-ordinate data, and
- the location tracing message is sent (504) in the direction of the entity tracing the location of the telecommunications terminal element.

6. A method according to any of Claims 1 - 5, **characterized in that**
- the location information received from the direction of the telecommunications terminal element comprises (302) a set of the location parameters contained in the location message, and
- a search (303) is made for co-ordinates indicating the interior of the cell or location area correspond to the location parameters, such as the co-ordinates of the cell (CIcr) or location area CLACcr).

7. A method according to any of Claims 1 - 6, **characterized in that** the method is carried out (112) in response to an initiator received from the mobile network or the direction of the mobile network.

8. A Method according to any of Claims 1 - 7, **characterized in that** a specified-form message, with a predefined message identifier, is sent (301) in the direction of the mobile station by means of a cell broadcast and/or at least one specified-form message, with a predefined message identifier, is received (112) by means of a cell broadcast, and that the message is used as an initiator.

9. A method according to any of Claims 1 - 8, **characterized in that** the telecommunications terminal element is a mobile station smart card.

10. A method according to Claims 1 - 9, **characterized in that** the telecommunications terminal element is a subscriber card.

11. A method according to any of Claims 1 - 8, **characterized in that** the telecommunications terminal element is a mobile station (30).

12. A method according to any of Claims 1 - 8, **characterized in that** the telecommunications terminal element is a computer software product.

13. A telecommunications terminal element, **characterized in that** it includes
- setting means for setting (401) a target value and a comparative index to be available to the telecommunications terminal element,
- receiving means for receiving (402-403) location messages containing the location parameters of the mobile station,
- selection means for selecting (404) a set of the location parameters contained in a location message, to form a set of comparative parameters,
- comparison means for comparing (404) the set of comparative parameters contained in a location message with a corresponding set of comparative parameters contained in a location message received earlier,
- deviation-decrease means for changing (406) the comparative index in the direction of the set of comparative parameters contained in the location message in response to the set of comparative parameters of the location message received earlier,
- deviation-increase means for changing (405) the comparative index away from the target value, if the set of comparative parameters deviates from the set of comparative parameters of the location message received earlier, and
- transmission means for sending (413) the location information according to the latest location message in the direction of the entity tracing the location of the mobile station.

14. A telecommunications terminal element according to Claim 13, **characterized in that** MCC, MNC, LAC, and CI parameters according to the GSM standard, or a sub-set of them, are used as the set of comparative parameters.

15. A telecommunications terminal element according to either Claim 13 or 14, **characterized in that** it is set to use (404) the previous locations message as the location message received earlier.

16. A telecommunications terminal element according to any of Claims 13 - 15, **characterized in that** the transmission means comprise means for sending (107) the most essential parts of the previous location message.

17. A telecommunications terminal element according to any of Claims 13 - 16, **characterized in that** it includes
- means for receiving (112) a specified-form message, with a predefined message identifier, by means of a cell broadcast covering at least one cell, and
- means for using (112) a specified-form message, with a predefined message identifier, as an initiator, by means of a cell broadcast covering at least one cell.

18. A telecommunications terminal element according to any of Claims 13 - 17, **characterized in that** it is a mobile station smart card.

19. A telecommunications terminal element according to any of Claims 13 - 18, **characterized in that** it is a subscriber card.

20. A telecommunications terminal element according to any of Claims 13 - 17, **characterized in that** it is a mobile station (30).

21. A computer software product comprising software codes adapted to carry out the steps of the method of any of claims 1 to 12.

## Patentansprüche

1. Verfahren zum Verfolgen des Aufenthalts- bzw. Standortes eines Telekommunikationsendgerätelements, wobei in dem Verfahren der Standort des Telekommunikationsendgerätelements auf der Basis der bekannten Standortdaten von Referenzelementen und auf der Signalisierung zwischen dem Telekommunikationsendgerätelement und den Referenzelementen geschätzt wird, **dadurch gekennzeichnet, daß**
- ein Zielwert und ein Vergleichsindex definiert werden (401), so daß sie an dem Telekommunikationsendgerätelement verfügbar sind,
- Standortnachrichten, welche die Standortparameter des Telekommunikationsendgerätelements enthalten, mittels des Telekommunikatiorisendgerätelements empfangen werden (402 403),
- ein Satz der Standortparameter, der in der Standortnachricht enthalten ist, ausgewählt wird (404), um einen Satz von Vergleichsparametern zu bilden,
- der Satz von Vergleichsparametern dann mit dem Satz von Vergleichsparametern einer früher empfangenen Standortnachricht verglichen wird (404),
- der Vergleichsindex in Richtung des Zielwerts geändert wird (406) , wenn der Satz von Vergleichsparametern dem, Satz von Vergleichsparametern einer früher empfangenen Standortnachricht entspricht,
- der Vergleichsindex von dem Zielwert weg geändert wird (405), wenn der Satz von Vergleichsparametern von dem entsprechenden Satz von Vergleichsparametern einer früher empfangenen Standortnachricht abweicht, und
- ansprechend darauf, daß der Vergleichsindex den Zielwert erreicht, Standortinformationen entsprechend der letzten Standortnachricht in die Richtung der Funktionseinheit gesendet werden, welche den Standort des Telekommunikationsendgerätelements verfolgt.

2. Verfahren nach Anspruch 1, **dadurch gekennzeichnet, daß** der Satz von Vergleichsparametern MCC-, MNC-, LAC- und CI-Parameter gemäß dem GSM-Standard enthält oder eine Untergruppe von ihnen.

3. Verfahren entweder nach Anspruch 1 oder 2, **dadurch gekennzeichnet, daß** die früher empfangene Standortnachricht die vorhergehende Standortnachricht ist (404).

4. Verfahren nach einem der Ansprüche 1 - 3, **dadurch gekennzeichnet, daß** die standortinformatioonen gemäß der letzten Standortnachricht die wesentlichen Teile der letzten standortnachricht sind (107).

5. Verfahren nach einem der Ansprüche 1 - 4, **dadurch gekennzeichnet, daß**
- Standortinformationen gemäß der Standortnachricht aus der Richtung des Telekommunikationsendgerätelements empfangen werden (501),
- der wahrscheinlichste geschätzte standort des Telekommunikationsendgerätelements, wie etwa der Mittelpunkt des Zellenbereichs oder der Zelle des von den Standortinformationen gemäß der Standortnachricht dargestellten Zellenbereichs, in der Form von Koordinatendaten gesucht wird (502),
- eine Standortverfolgungsnachricht gemäß dem standard, die in dem Abbildungssystem verwendet wird, wie etwa eine GLL-Nachricht gemäß NMEA-0182, aus den koordinatendaten gebildet wird(503), und
- die Standortverfolgungsnachricht in die Richtung der Funktionseinheit gesendet wird (504), welche den Standort des Telekommunikationsendgerätelements verfolgt.

6. Verfahren nach einem der Ansprüche 1 - 5, **dadurch gekennzeichnet, daß**
- die aus der Richtung des Telekommunikationsendgerätelements empfangenen Standortinformationen einen Satz der Standortparameter aufweisen (302), der in der Standortnachricht enthalten ist, und
- eine Suche nach Koordinaten durchgeführt wird (303), welche das Innere der Zelle oder den Standortbereich, der den Standortparametern entspricht, anzeigen, wie etwa die Koordinaten der celle (CIcr) oder des Standortbereichs (LACcr) .

7. Verfahren nach einem der Ansprüche 1 - 6, **dadurch gekennzeichnet, daß** das verfahren ansprechend auf einen Auslöser von dem mobilen Netzwerk oder aus der Richtung des mobilen Netzwerks ausgeführt wird (112).

8. Verfahren nach einem der Ansprüche 1 - 7, **dadurch gekennzeichnet, daß** eine Nachricht mit spezifizierter Form mit einer vordefinierten Nachrichtenkennung mittels eines Zellenrundrufs in die Richtung der Mobilstation gesendet wird (301) und/oder wenigstens eine Nachricht mit spezifizierter Form mit einer vordefinierten Nachrichtenkennung mittels eines Zellenrundrufs empfangen wird (112), und daß die Nachricht als ein Auslöser verwendet wird.

9. verfahren nach einem der Ansprüche 1 - 8, **dadurch gekennzeichnet, daß** das Telekommunikationsendgerätelement eine Chipkarte einer Mobilstation ist.

10. Verfahren nach den Ansprüchen 1 - 9, **dadurch gekennzeichnet, daß** das Telekommunikationsendgerätelement eine Teilnehmerkarte ist.

11. Verfahren nach einem der Ansprüche 1 - 8, **dadurch gekennzeichnet, daß** das Telekommunikationsendgerätelement eine Mobilstation (30) ist.

12. Verfahren nach einem der Ansprüche 1 - 8, **dadurch gekennzeichnet, daß** das Telekommunikationsendgerätelement ein Computer-Softwareprodukt ist.

13. Telekommunikationsendgerätelement, **dadurch gekennzeichnet, daß** es aufweist:
- eine Festlegungseinrichtung zum Festlegen (401) eines Zielwerts und eines Vergleichsindexes (401), so daß sie an dem Telekommunikationsendgerätelement verfügbar sind,
- eine Empfangseinrichtung zum Empfangen (402 - 403) von Standortnachrichten, welche die Standortparameter der Mobilstation enthalten,
- eine Auswahleinrichtung zum Auswählen (404) eines Satzes der Standortparameter, die in der Standortnachricht enthalten sind, um einen Satz von Vergleichsparametern zu bilden, - eine Vergleichseinrichtung zum Vergleichen (404)
- eine Vergleichseinrichtung zum Vergleichen (404) des Satzes von Vergleichsparametern, der in der Standortnachricht enthalten ist, mit einem entsprechenden Satz von Vergleichsparametern, der in einer früher empfangenen Standortnachricht enthalten ist,
- eine Abweichungsverringerungseinrichtung zum Ändern (406) des vergleichsindexes in Richtung des Satzes von Vergleichsparametern, die in der Standortnachricht enthalten sind, ansprechend auf den Satz von Vergleichsparmetern der früher empfangenen Standortnachricht,
- eine Abweichungsverringerungseinrichtung zum Ändern (405) des Vergleichsindexes weg von dem Zielwert, wenn der Satz von Vergleichsparametern von dem Satz von Vergleichsparametern der früher empfangenen Standortnachricht abweicht, und
- eine Sendeeinrichtung zum Senden (413) der Standortinformationen entsprechend der letzten Standortnachricht in die Richtung der Funktionseinheit, welche den Standort der Mobilstation verfolgt.

14. Telekommunikationsendgerätelement nach Anspruch 13. **dadurch gekennzeichnet, daß** MCC-, MNC,-, LAC- und CI-Parameter gemäß dem GSM-Standard oder eine Untergruppe von ihnen, als der Satz von Vergleichsparametern verwendet werden.

15. Telekommunikationsendgerätelement entweder nach Anspruch 13 oder 14, **dadurch gekennzeichnet, daß** es eingestellt ist, um die vorhergehende Standortnachricht als die früher empfangene Standortnachricht zu verwenden.

16. Telekommunikationsendgerätelement nach einem der Ansprüche 13 - 15, **dadurch gekennzeichnet, daß** die übertragungseinrichtung Einrichtungen zum Senden (107) der wesentlichsten Teile der vorhergehenden Standortnachricht aufweist.

17. Telekommunikationsendgerätelement nach einem der Ansprüche 13 - 16, **dadurch gekennzeichnet, daß** es aufweist:
- Einrichtungen zum Empfangen (112) einer Nachricht mit spezifizierter Form mit einer vordefinierten Nachrichtenkennung mittels eines Zellenrundrufs, der wenigstens eine Zelle abdeckt, und
- Einrichtungen zum Verwenden (112) einer Nachricht mit spezifizierter Form mit einer vordefinierten Nachrichtenkennung als einen Auslöser mittels eines Zellenrundrufs, der wenigstens eine Zelle abdeckt.

18. Telekommunikationsendgerätelement nach einem der Ansprüche 13 - 17, **dadurch gekennzeichnet, daß** es eine Chipkarte einer Mobilstation ist.

19. Telekommunikationsendgerätelement nach den Ansprüchen 13 - 18, **dadurch gekennzeichnet, daß** es eine Teilnehmerkarte ist.

20. Telekommunikationsendgerätelement nach einem der Ansprüche 13 - 17, **dadurch gekennzeichnet, daß** es eine Mobilstation (30) ist.

21. Computer-Softwareprodukt, das Softwarecode aufweist, der geeignet ist, die Schritte des Verfahrens nach jedem der Ansprüche 1 bis 12 auszuführen.

## Revendications

1. Procédé de suivi de la localisation d'un terminal de télécommunications, dans lequel la localisation du terminal de télécommunications est estimée sur la base des données de localisation connues d'éléments de référence et de la signalisation entre le terminal de télécommunications et les éléments de référence, **caractérisé en ce que**
- une valeur cible et un index comparatif sont définis (401) afin d'être disponibles pour le terminal de télécommunications,
- des messages de localisation, qui contiennent les paramètres de localisation du terminal de télécommunications, sont reçus (402 - 403) à l'aide du terminal de télécommunications,
- un ensemble de paramètres de localisation contenus dans le message de localisation est choisi (404) afin de former un ensemble de paramètres comparatifs,
- l'ensemble de paramètres comparatifs est ensuite comparé (404) avec l'ensemble de paramètres comparatifs d'un message de localisation reçu auparavant,
- l'index comparatif est augmenté (406) vers la valeur cible si l'ensemble de paramètres comparatifs correspond à l'ensemble de paramètres comparatifs d'un message de localisation reçu auparavant,
- l'index comparatif est diminué (405) par rapport à la valeur cible si l'ensemble de paramètres comparatifs s'écarte de l'ensemble correspondant de paramètres comparatifs d'un message de localisation reçu auparavant, et
- en réponse à l'index comparatif atteignant la valeur cible, des informations de localisation dépendant du dernier message de localisation sont envoyées (413) en direction de l'entité suivant la localisation du terminal de télécommunications.

2. Procédé selon la revendication 1, **caractérisé en ce que** l'ensemble de paramètres comparatifs comprend des paramètres MCC, MNC, LAC et CI, ou un sous-groupe de ceux-ci, selon la norme GSM.

3. Procédé selon la revendication 1 ou 2, **caractérisé en ce que** le message de localisation reçu auparavant est (404) le message de localisation précédent.

4. Procédé selon l'une quelconque des revendications 1 à 3, **caractérisé en ce que** les informations de localisation selon le dernier message de localisation sont (107) les parties essentielles du dernier message de localisation.

5. Procédé selon l'une quelconque des revendications 1 à 4, **caractérisé en ce que**
- les informations de localisation selon le message de localisation sont reçues (501) en direction du terminal de télécommunications,
- le point de localisation estimé le plus probable du terminal de télécommunications, comme le point central de la zone de la cellule ou de la cellule, de La zone de cellule indiquée par les informations de localisation selon le message de localisation, est recherché (502) sous la forme de données de coordonnées,
- un message de suivi de localisation selon la norme utilisée dans le système de mappage, comme un message GLL selon NMEA-0182, est formé (503) à partir des données de coordonnées, et
- le message de suivi de localisation est envoyé (504) en direction de l'entité suivant la localisation du terminal de télécommunications.

6. Procédé selon l'une quelconque des revendications 1 à 5, **caractérisé en ce que**
- les informations de localisation reçues en direction du terminal de télécommunications comprennent (302) un ensemble de paramètres de localisation contenus dans le message de vocalisation, et
- une recherche (303) est effectuée pour les coordonnées indiquant que l'intérieur de la cellule ou de la zone de vocalisation correspond aux paramètres de localisation, comme les coordonnées de la cellule (CIcr) ou de la zone de localisation (LACcr).

7. Procédé selon l'une quelconque des revendications 1 à 6, **caractérisé en ce que** le procédé est réalisé (112) en réponse à un initiateur reçu de la part du réseau mobile ou en direction du réseau mobile.

8. Procédé selon l'une quelconque des revendications 1 à 7, **caractérisé en ce qu'**un message de forme spécifiée, ayant un identifiant de message prédéfini, est envoyé (301) en direction de la station mobile à l'aide d'une émission cellulaire, et/ou au moins un message de forme spécifiée, ayant un identifiant de message prédéfini, est reçu (112) à l'aide d'une diffusion cellulaire, et **en ce que** le message est utilisé comme un initiateur.

9. Procédé selon l'une quelconque des revendications 1 à 8, **caractérisé en ce que** le terminal de télécommunications est une carte à puce de station mobile.

10. Procédé selon les revendications 1 à 9, **caractérisé en ce que** le terminal de télécommunications est une carte d'abonné.

11. Procédé selon l'une quelconque des revendications 1 à 8, **caractérisé en ce que** le terminal de télécommunications est une station mobile (30).

12. Procédé selon l'une quelconque des revendications 1 à 8, **caractérisé en ce que** le terminal de télécommunications est un produit de logiciel informatique.

13. Terminal de télécommunications, **caractérisé en ce qu'**il comprend
- un moyen de définition destiné à définir (401) une valeur cible et un index comparatif devant être disponibles pour le terminal de télécommunications,
- un moyen de réception destiné à recevoir (402-403) des messages de localisation contenant les paramètres de localisation de la station mobile,
- un moyen de sélection destiné à sélectionner (404) un ensemble des paramètres de localisation contenus dans un message de localisation, afin de former un ensemble de paramètres comparatifs,
- un moyen de comparaison destiné à comparer (404) l'ensemble de paramètres comparatifs contenus dans un message de localisation avec un ensemble correspondant de paramètres comparatifs contenus dans un message de localisation reçu auparavant,
- un moyen de diminution d'écart destiné à augmenter (406) l'index comparatif vers l'ensemble de paramètres comparatifs contenus dans le message de localisation en réponse à l'ensemble de paramètres comparatifs du message de localisation reçu auparavant,
- un moyen d'augmentation d'écart destiné à diminuer (405) l'index comparatif par rapport à la valeur cible, si l'ensemble de paramètres comparatifs s'écarte de l'ensemble de paramètres comparatifs du message de localisation reçu auparavant, et
- un moyen de transmission destiné à envoyer (413) les
- un moyen de transmission destiné à envoyer (413) les informations de localisation dépendant du dernier message de localisation en direction de l'entité suivant la localisation de la station mobile.

14. Terminal de télécommunications selon la revendication 13, **caractérisé en ce que** des paramètres MCC, MNC, LAC et CI selon la norme GSM, ou un sous-ensemble de ceux-ci, sont utilisés comme l'ensemble de paramètres comparatifs.

15. Terminal de télécommunications selon la revendication 13 ou 14, **caractérisé en ce** qul'il est réglé afin d'utiliser (404) les messages de localisation précédents comme message de localisation reçu auparavant.

16. Terminal de télécommunications selon l'une quelconque des revendications 13 à 15, **caractérisé en ce que** le moyen de transmission comprend un moyen d'envoi (107) des parties les plus essentielles du messages de localisation précèdent.

17. Terminal de télécommunications selon l'une quelconque des revendications 13 à 16, **caractérisé en ce qu'**il comprend
- un moyen de réception (112) d'un message de forme spécifiée, ayant un identifiant de message prédéfini, à l'aide d'une diffusion cellulaire, couvrant au moins une cellule, et
- un moyen d'utilisation (112) d'un message de forme spécifiée, ayant un identifiant de message prédéfini, comme initiateur, à l'aide d'une diffusion cellulaire couvrant au moins une cellule.

18. Terminal de télécommunications selon l'une quelconque des revendications 13 à 17, **caractérisé en ce qu'**il est une carte à puce de station mobile.

19. Terminal de télécommunications selon l'une quelconque des revendications 13 à 18, **caractérisé en ce qu'**il est une carte d'abonné.

20. Terminal de télécommunications selon l'une quelconque des revendications 13 à 17, **caractérisé en ce qu'**il est une station mobile (30).

21. Produit de logiciel informatique comprenant des codes logiciels adaptés pour réaliser les étapes du procédé selon l'une quelconque des revendications 1 à 12.
